# EUROPEAN PATENT SPECIFICATION

(11) **EP 3 219 897 B1**
(45) Date of publication and mention of the grant of the patent: **30.01.2019**
(21) Application number: 16160134.9
(22) Date of filing: 14.03.2016
(51) Int. Cl.: E06B 9/68

(54) **A SCREENING DEVICE COMPRISING A CONFIGURABLE MOTOR DRIVE AND A METHOD FOR AUTOMATIC CONFIGURATION OF SUCH MOTOR DRIVES**
VORHANG MIT EINEM KONFIGURIERBAREN MOTORANTRIEB UND VERFAHREN ZUR AUTOMATISCHEN KONFIGURATION SOLCH EINES MOTORANTRIEBS
ECRAN COMPRENANT UNE COMMANDE DE MOTEUR ENTRAÎNÉ CONFIGURABLE ET UN PROCÉDÉ DE CONFIGURATION AUTOMATIQUE DE TELS MOTEURS ENTRAÎNÉS

(43) Date of publication of application: 20.09.2017
(73) Proprietor: VKR Holding A/S, 2970 Hørsholm (DK)
(72) Inventor: NIELSEN, Martin Sandal, 6830 Nørre Nebel (DK)
(74) Representative: Patentgruppen A/S

(56) References cited:
- DE-A1-102013 109 685
- US-A1- 2007 171 054
- US-A1- 2009 308 543

## Description

### Background of the invention

The present invention relates to motorized screening devices, particularly to configuration of motor drives comprised by such screening devices.

### Description of the Related Art

Motorized screening devices for windows are known in the art. Different types of screening devices may need different motor drives for operating the screening device to meet required specifications of particular screening devices. Accordingly, production of motorized screening devices may require availability of different motor drives in the production. Motor drives may be programmable to have different motor specifications for different screening devices. In this way the same motor drive may be used for different screening devices by programming the motor drive according to the required specifications of a particular screening device. However, even with programmable motor drives, different motor drives programmed according to different specifications still need to be available in the production. Accordingly, there is a need to simplify the production of screening devices since the production, as explained, requires availability of differently configured motor drives.

In some situations the motor drive cannot be configured beforehand, e.g. in situations where the configuration is dependent on installation conditions. Programmable motor drives may be configured at the location of the installation. However, this would normally require the presence of authorized service people. In situations where the motor drive has failed and must be replaced it may also be required to configure the new motor drive at the location of installation. Accordingly, there is also a need to simplify the configuration of motor drives for screening devices at locations of installation.

DE 10 2013 109 685 discloses a motor drive for screening devices which comprises a transponder chip. Via the transponder chip, the motor drive is able to store data or parameters received wirelessly from an external programming device. Accordingly, the motor drive is configurable via the external programming device. Accordingly, the motor drive may be configured at the location of installation, but would require presence of authorized service people in order to program the motor drive via the external programming device.

US 2010/0097238 similarly discloses configuration of home automation installations, e.g. blinds, by use of an external programming device and, therefore, also require presence of authorized service people.

US 2009/0308543 discloses an electronically-controlled roll-up window shade that can easily be installed by a home owner or general handyman. The motorized shade includes an internal power source, a motor, and a communication system to allow for remote control of the motorized shade. The electronics module includes in one embodiment a controller, a RF transceiver, a optional RFID tag.

### The invention

An aspect of the invention according to claim 1 relates to a screening device for an architectural opening, such as a window, the screening device comprises
- screening means for screening at least a part of the architectural opening,
- screening displacement means for displacing the screening means, where the screening displacement means comprises a motor drive arranged for driving the screening displacement means, and where the motor drive is controllable dependent on at least one driving parameter,
where the screening device comprises at least one electronic storage circuit comprising stored information, where the motor drive comprises an electronic reader arranged to receive the stored information via wireless communication between the at least one electronic storage circuit and the electronic reader, and where the motor drive is arranged to obtain the at least one driving parameter based on the stored information.

The screening displacement means is a component of the screening device which is connected with the screening means, e.g. a blind, and which is configured to cause displacement of the screening means via the motor output.

Advantageously, since the at least one electronic storage circuit is comprised by the screening device, e.g. attached to the screening device or a component of the screening device, and since the motor drive is controllable or configurable via the wireless transmission of the stored information to the electronic reader, the motor drive can be configured automatically in the sense that no other electronic devices are required for configuring the motor drive.

For example, the at least one electronic storage circuit may be comprised by the screening displacement means, the screening means or other component of the screening device. It is also possible to provide the screening device with more than one electronic storage circuit. For example, one electronic storage circuit may be attached to the screening displacement means and another electronic storage circuit may be attached to the displacement means. In this way the motor drive may be configured with different driving parameters obtained from different electronic storage circuits.

The stored information may include all information which is necessary for configuring the motor drive, e.g. the stored information may include all parameters which could be relevant for configuration of the motor drive, and/or the stored information may include data which enables determination of any configuration parameter.

Since all information necessary for configuring the motor drive is present in the screening device, the motor drive may be configured automatically at the location of installation. Accordingly, the motor drive can be configured automatically dependent on installation conditions. The installation conditions may be determined by the screening device, e.g. by an electronic processor comprised by the motor drive or via sensor outputs, e.g. through procedures performed by the screening device.

Furthermore, in the production or assembly of screening devices, the motor drive may be automatically configured at the time when the screening device is assembled, e.g. when the motor drive is connected with the screening device or a component thereof, e.g. the component comprising the motor drive or other component such as the screening means. Accordingly, the number of differently configured motor drives which need to be available in the production can be reduced so that the production is simplified.

Furthermore, previously, one of the available motor drives in the production may have been configured to be used with a number of different screening devices, e.g. a number of the same type of screening devices provided with different lengths of blinds, in order to keep the number of available motor drive at a reasonable level. By use of the automatic configuration method, the motor drives may be configured to obtain the best performance for each length of the blinds by providing each screening device with information stored by the electronic storage device which is specific for particular lengths of a blind or other characteristic of the screening device.

In an aspect of the invention the electronic reader and the at least one electronic storage circuit are located in the screening device to enable direct communication between the electronic reader and the at least one electronic storage circuit, when the screening displacement means and the motor drive are assembled. Advantageously, by means of the direct communication obtained when the screening device is assembled, e.g. when the component of the screening device comprising the electronic storage circuit and the motor drive are assembled, the motor drive may be configured automatically at the time of assembly.

In an aspect of the invention the at least one electronic storage circuit is configured to be powered via a wireless signal received from the electronic reader. Advantageously, the electronic storage circuit may be a simple and cheap passive electronic storage circuit which does not require powering from batteries comprised by the electronic storage circuit or the screening displacement means. In this way, each screening displacement means may be provided with stored information for configuring the motor drive at low costs.

In an aspect the electronic reader is arranged to receive the stored information in response to receiving electronic power from a power supply. Advantageously, the electronic reader may be waked-up at a time it receives power, e.g. when the screening device is installed, so that the configuration of the motor drive takes place when the screening device is installed or tested in the production.

In an aspect of the invention the power supply is additionally used for powering the motor drive. Advantageously, the power supply, e.g. a battery, or mains connected power supply, used for powering the motor drive, e.g. the electrical motor of the motor drive, may additionally be used for powering the electronic reader.

In an aspect of the invention the electronic reader is enclosed by an enclosure of the motor drive and the electronic reader is arranged to communicate with the at least one electronic storage circuit via wireless signals transmitted though the enclosure. Advantageously, the electronic reader may be attached to a printed circuit board and, thereby, easily connected to other electronic circuits comprised by the motor drive, when the communication takes place through the enclosure, e.g. an enclosure where at least a part of the enclosure, e.g. a shell, is constituted by e.g. plastic. Furthermore, complicated designs requiring antennas protruding through the enclosure is avoided.

In an aspect of the invention the motor drive comprises a memory for storing the driving parameter. Advantageously, a memory may be used for permanent storage of the parameters.

In an aspect of the invention the stored information comprises the at least one driving parameter. Accordingly, one or more of the driving parameters to be used for configuring the motor drive may be directly obtained from the electronic storage device.

In an aspect of the invention the stored information comprises an identifier for identifying a type or property of the screening device. Accordingly, instead of storing one or more of the required driving parameters in the electronic storage device, the motor drive may be configured to determine the driving parameters based on the received information, e.g. screening type information.

In an aspect of the invention the motor drive comprises a processor unit capable of determining a physical property relating to said displacement of the screening means, where the processor unit is capable of determining an angular orientation of the screening device based on the physical property and the stored information.

Advantageously, by use of stored information, e.g. a weight of a screening means of the specific screening device, the angular orientation may be determined accurately at the location of installation. Accordingly, the motor drive may be configured dependent on the determined angular orientation so that optimum performance may be obtained for the screening device.

In an aspect of the invention the motor drive comprises a processor unit capable of determining an amplitude of current consumed by a motor of the motor drive, where the processor unit is capable of controlling the motor based on the current amplitude and the stored information.

Advantageously, the determined current amplitude may be used for assessing if the electrical motor consumes an over current, e.g. due to an obstacle prohibiting motion of the screening means. However, since determining the presence of an obstacle requires knowledge of e.g. the weight of the screening means, the stored information containing e.g. weight parameters may advantageously be used together with the current amplitude for determining the presence of obstacles.

In an aspect of the invention, the at least one electronic storage circuit is provided at the screening means or at the screening displacement means.

Advantageously, the electronic storage circuit may be comprised by the screening displacement means or screening means, since the electronic storage circuit, at a location of the screening displacement means or screening means, may be located proximate to the electronic reader.

In an aspect of the invention, the driving parameter is at least one of motor revolutions, motor speed or motor current. Advantageously, the motor drive may be configured with a motor revolution parameter to set the desired revolutions per second, a motor speed parameter to set a desired motor speed or a motor current to set a desired current consumption of the motor.

An aspect of the invention according to claim 14 relates to a method for configuring a motor drive for a screening device for an architectural opening, where the screening device comprises the motor drive and a screening displacement means for displacing a screening means by means of the motor drive, the method comprises
- activating an electronic reader comprised by the motor drive,
- upon activating the electronic reader, receiving stored information via wireless communication with at least one electronic storage circuit comprised by the screening device,
- obtaining at least one driving parameter for configuring the motor drive, where the at least one driving parameter is obtained based on the stored information.

Advantageously, when the electronic reader is activated, e.g. when it receives power, the electronic reader receives information from the electronic storage circuit so that the driving parameters for the motor drive can be obtained automatically, i.e. independent from external programming devices.

In an aspect of the invention, the method is a method for configuring a motor drive for a screening device according to any of the previously mentioned screening devices.

### Figures

The invention will be described in the following with reference to the figures in which
- fig. 1: shows a screening device for an architectural opening,
- fig. 2: shows an example of a screening device comprising a screening displacement means,
- figs. 3-4: show another example of a screening device comprising the screening displacement means,
- fig. 5: shows a screening device and an architectural opening mounted in an inclined roof surface of a building.

### Detailed description of the invention

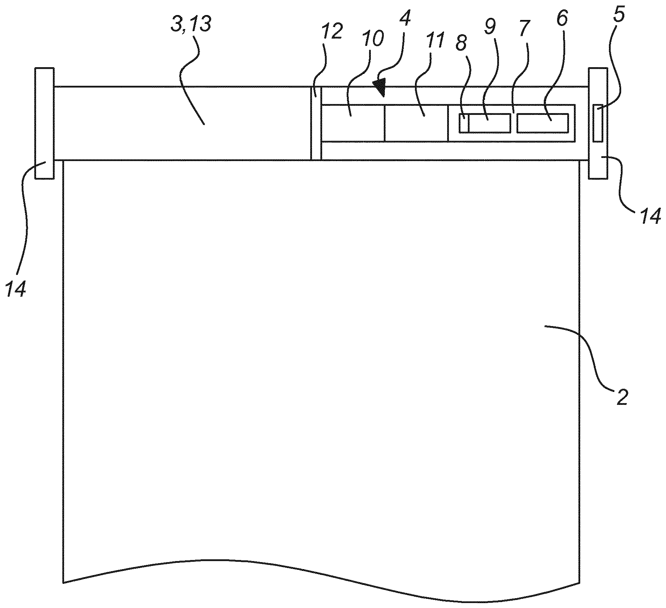

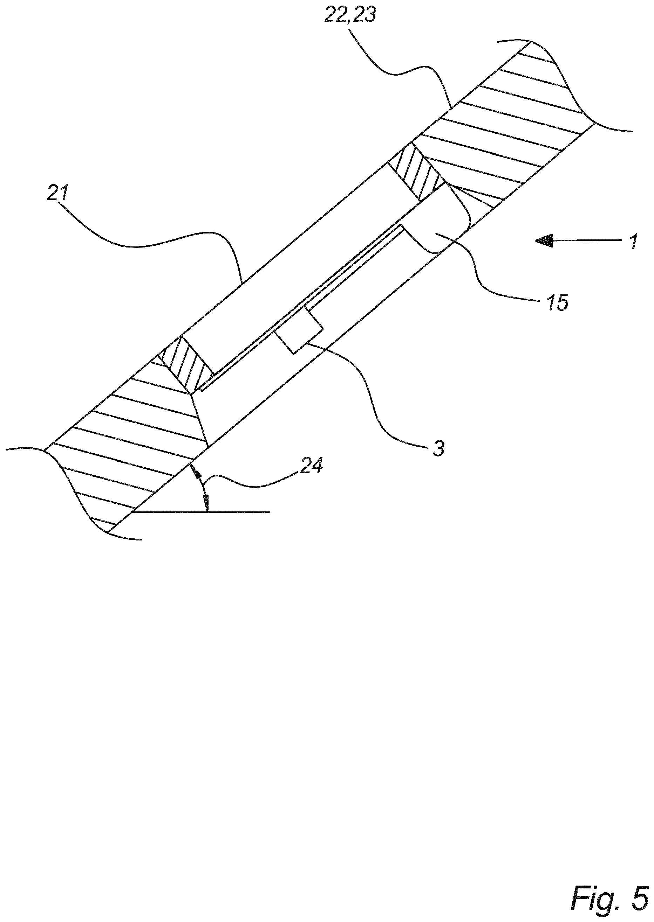

Fig. 1 principally illustrates a screening device 1 for an architectural opening 21, such as a window (Fig. 5 shows an architectural opening 21). The screening device comprises screening means 2 for screening at least a part of the architectural opening. The screening device 1 further comprises screening displacement means 3 for displacing the screening means. The screening displacement means 3 comprises a motor drive 4 arranged for driving the screening displacement means 3 and, thereby, displacing the screening means 2

The screening device 1 may be or form part of e.g. a roller shutter, a retractable awning, a roller blind, a folding blind, a venetian blinds other screening device.

The displacement means 3 refers to a part of the screening device 1 configured to displace the screening means 2. The motor drive 4 may be operatively engaged with the displacement means 3 to cause an action of the screening displacement means 3 which causes displacement of the screening means.

Accordingly, the term *"screening displacement means* " in this context should be interpreted as any kind of displacement means suited for displacing or moving the screening means 2, i.e. any screening roller, blind roller, displaceable transversal profile, actuator or system capable of displacing, moving, rolling-up or rotating the screening means, or other or any combination thereof.

The term *"screening means* " in this context should be interpreted as any kind of screen suited for screening a window, i.e. any kind of curtain, drape, blind, shade, shutter or other or any combination thereof.

An architectural opening in this context should be interpreted as any kind of window, door, hole and other architectural opening provided in buildings and other structures. For convenience, examples, embodiments and other descriptions are mainly described with reference to windows, but are not limited to use with windows unless otherwise noted.

The motor drive 4 is controllable dependent on at least one driving parameter. Accordingly, the motor drive 4 is configurable to be configured by at least one driving parameter.

According to the illustration in Fig. 1, the screening displacement means comprises an electronic storage circuit 5 comprising stored information and the motor drive 4 comprises an electronic reader 6 arranged to receive the stored information from the electronic storage circuit 5 via wireless communication between the electronic storage circuit 5 and the electronic reader 6. The electronic storage circuit may be comprised by any component of the screening device, or one or more electronic storage circuits may be comprised by any one or more components of the screening device. For example, the electronic storage circuit may alternatively or additionally be comprised by the screening means 2, e.g. attached to the screening means 2 at a location proximate to the electronic reader. Thus, in general, the electronic storage circuit may be comprised by the screening device.

The motor drive 4 is arranged to obtain the at least one driving parameter based on the stored information. Obtaining the at least one driving parameter based on the stored information can be performed is different ways.

For example, the information stored by the electronic storage circuit 5 may comprise the at least one driving parameter, e.g. a list of driving parameters for the motor drive 4. According to this example, the motor drive 4 is arranged to obtain the at least one driving parameter by directly receiving the at least one driving parameter from the electronic storage circuit 5.

Similarly, the electronic storage circuit 5 may comprise a list of driving parameters for different motor drives 4 or different configuration options. Accordingly, the electronic reader 6 may receive a list or plurality of driving parameters for different motor drives 4 or different configuration options and, therefore, the motor drive 4 may be arranged to select the at least one driving parameter from the plurality of received driving parameters. The selection may be performed dependent on data which is accessible by the motor drive 5, e.g. stored motor type data.

In another example, the information stored by the electronic storage circuit 5 may comprise at least one identifier, e.g. at least one identifier for identifying a type or property of the screening device 1. According to this example, the motor drive 4 is arranged to obtain the at least one driving parameter indirectly based on the at least one identifier. For example, the motor drive 4 may be configured to determine the at least one driving parameter from the received identifier based on data stored by the motor drive 4, e.g. data in the form of a table which contains the at least one driving parameter and its association with the information, e.g. an identifier, received from the electronic storage circuit 5.

The motor drive 4 may be configured in various ways. Generally, the motor drive 4 may comprise one or more of a motor 10 such as an electrical AC or DC motor, a gear box 11 arranged to change the rotation speed of the motor output, and a power supply 7 for supplying power to the motor 10 and possibly other devices, e.g. the electronic reader 6. Examples of the power supply 7 include batteries, rechargeable batteries, power transformers, etc. The motor 10 may be engaged with the displacement means 3 to cause displacement of the screening means 2. For example, the displacement means 3 may comprise a roller 13, e.g. a blind roller. The motor drive 4 may be configured as a tubular motor drive which is contained within the interior of the blind roller and the motor 10 of the motor drive 4 may be connected with the roller 13 by a coupling 12 so as to rotate the roller 13.

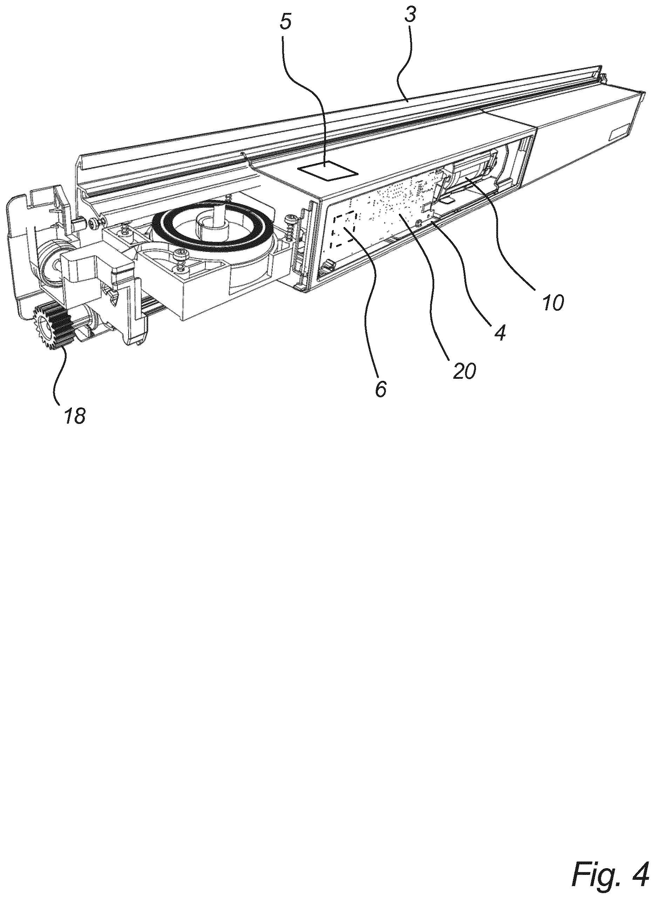

The motor drive 4 may additionally comprise an electronic memory 8 configured to store the driving parameter. The memory 8 may also be configured to store the received information from the electronic storage circuit 5 and other data. The motor drive 4 may additionally comprise a processor unit 9, i.e. an electronic circuit capable of processing input data and generating output data based on the input data. For example, the processor unit 9 may comprise an electronic data processor arranged to run an algorithm for processing data such as the input data. The motor drive 4 may comprise a printed circuit board 20 (see Fig. 4) which contains one or more of the processor unit 9, the memory 8 and a control circuit for controlling the motor 10. Additionally, the printed circuit board may contain the electronic reader 6. Clearly, these electronic components need not all be located on the same printed circuit board, e.g. the electronic reader 6 could be located separately from the processor unit 9 and/or the memory 8, but connected via a wireless or wired connection.

As illustrated in Fig. 1, the electronic reader 6 and the electronic storage circuit 5 are located in the screening device 1 so that the distance between the electronic reader 6 and the electronic storage circuit 5 is relatively small in the assembly of the screening device 1. In order to enable wireless communication between the electronic storage circuit 5 and the electronic reader 6 the distance between the storage 5 and the reader 6 must satisfy distance requirements of the specific electronic reader 6 and the electronic storage circuit 5. Accordingly, the electronic reader 6 and the electronic storage circuit 5 may be located in the screening device 1 to enable direct communication between the electronic reader 6 and the electronic storage circuit 5 when the screening displacement means 3 and the motor drive 4 are assembled, i.e. when the motor drive 4 is located as intended relative to the displacement means 3 in the final assembly of the motor drive 1.

As an example, the electronic storage device 5 and the electronic reader 6 may utilize near field communication (NFC) technologies, radio-frequency identification (RFID) technologies or similar technologies capable of communicating wirelessly based on radio-frequency signals, sound waves, light signals, magnetic or in general any electro-magnetic signals. For example, the electronic storage circuit 5 may be an RFID tag and the electronic reader 6 may be an RFID reader.

In the example where the electronic reader 6 and the electronic storage circuit 5 are based on RFID technology, the distance between the electronic reader 6 and the electronic storage circuit 5 may be in the range from 1 cm to 15 cm, e.g. in the range from 5 cm to 10 cm.

The stored information contained by the electronic storage device 5 may be in the form read-only data or read-write data. The electronic storage device may be a passive electronic storage device configured to be activated via a wireless signal received from the electronic reader 6. The passive electronic storage device may contain a battery for powering the electronic storage device when it is activated. Alternatively, the electronic storage circuit 5 does not contain a battery but is configured to be powered via a wireless signal received from the electronic reader 6 and, thereby, activated by the wireless signal received from the electronic reader 6.

The electronic reader 6 may be powered by the power supply 7. The electronic reader 6 may be configured so that when it is powered, i.e. when it receives power after a period where the electronic reader 6 was not powered, the electronic reader 6 sends a wireless signal to the electronic storage circuit 5 which activates the electronic storage circuit 5. As explained, the received wireless signal may also power the electronic storage circuit 5. In response to being activated, the electronic storage circuit 5 transmits the stored information to the electronic reader 6. Accordingly, the electronic reader 6 may be arranged to receive the stored information from the electronic storage circuit 5 in response to receiving electronic power from a power supply 7.

The power supply 7 may additionally be used for powering the motor drive 4, e.g. for powering the motor 10 and other electronic circuits. For example, after the screening device 1 is installed for screening an architectural opening, the motor drive 4 is powered via the power supply, e.g. via a power switch. Accordingly, the electronic reader 6 is also powered and receives the stored information in response to being powered. Accordingly, at the time when the motor drive 4 and the electronic reader 6 is powered for the first time, which may happen in connection with installing the screening device 1, in connection with assembly of the screening device 1 during production, or in other situations, the motor drive 4 is configured. The configuring involves obtaining one or more driving parameters for configuring the motor drive, where the driving parameters are obtained based on the stored information.

The electronic reader 6 may be located within an enclosure of the motor drive 4. For example, as explained, the electronic reader 6 may be located on a printed circuit board 20 contained within an enclosure of the motor drive 4. Accordingly, since the electronic reader 6 may be located within an enclosure of the motor drive, the electronic reader 6 may be arranged to communicate with the electronic storage circuit 5 via wireless signals transmitted though the enclosure.

To enable wireless communication though the enclosure of the motor drive 4, at least part of the enclosure may be made from a material which allows transmission of signals, e.g. radio-frequency signals. Accordingly, the motor drive 4 may comprise an enclosure where at least a part of the enclosure consists of a material which allows transmission of signals between the electronic storage circuit 5 and the electronic reader 6, e.g. a material which is non-conducting for electrical currents, such as non-metallic materials like plastic materials, composite materials, etc.

The processor unit 9 may be configured to determine a physical property relating to the displacement of the screening means 2. The physical property may for example be an electrical current consumed by the motor 10 during displacement of the screening means or an acceleration or velocity of the screening means 2. Accordingly, the screening device 1 may configured with suitable sensors, e.g. a current sensor for measuring the current consumed by the motor 10 and/or a tachometer, encoder or the like for measuring the position, speed or acceleration of the screening means. Based on the sensor measurements, the processor unit 9 is capable of determining the physical property. Based on the physical property and the stored information received by the electronic reader 6, the processor unit 9 may be configured to determine a driving parameter.

As an example of a driving parameter, the processor unit may be configured to determine an angular orientation 24 of the screening device based on the physical property and the stored information. For example, the stored information may comprise information relating to the weight of the screening means 2. Based on the weight information and the physical property, e.g. an acceleration of the screening means 2 obtained during a displacement, it is possible to determine the angular orientation of the screening device 1.

The screening device 1 may be mounted in an inclined orientation for screening an architectural opening in an inclined surface of a building. Accordingly, the screening device 1 could have an angular orientation (e.g. 30, 45 or 90 degrees) which is not known when the screening device is produced. The determined angular orientation of the screening device after installation may be used as a driving parameter for the motor drive 4, e.g. for setting limits of electrical current to be supplied to the motor 10.

According to another example where the determined physical property is an electrical current consumed by the electrical motor 10, e.g. an amplitude of a current consumed by a motor 10, the motor drive 4, e.g. the processor unit 9, may be configured to control the motor 10 based on the determined current amplitude and the stored information. The current amplitude may be an average current, or maximum current consumed by the electrical motor 10 obtained during a period of time where the screening means 2 is displaced in a given direction, e.g. downwards. The current amplitude depends on, among other things, the weight of the screening means 2. Due to gravity, a relatively heavy screening means 2 would cause consumption of lower current amplitude than a relatively lighter screening means 2 would. If during displacement, the screening means 2 meets an obstacle, e.g. a child's hand or other objects, the amplitude of the current consumption would rise. By comparing the determined electrical current consumed by the motor 10 with a driving parameter, e.g. a current threshold, obtained on basis of the stored information, it is possible to determine if the consumed current indicates that the displacement of the screening means 2 may be affected by an obstacle. Accordingly, based on the determined current amplitude and the stored information, the motor 10 may be controlled to stop further displacement of the screening means 2 in order to prohibit injuries or damages to objects. The current threshold for determining presence of obstacles for the screening means 2 depends on e.g. the type of the screening device 1, weight of the screening means 2 and the length of the screening means. Accordingly, the stored information may contain information which enables determination of a driving parameter for a current threshold associated with a particular screening device 1, or a particular configuration of a screening device.

As another example, the stored information may contain information which enables determination of a driving parameter for a desired velocity of the displacement of the screening means. It is noted that enabling determination of a driving parameter for a desired velocity, or other property, from the stored information, may be obtained when the stored information comprises the desired driving parameter (e.g. desired velocity, or other property), or when the electronic reader 6 comprises data (e.g. a table as explained elsewhere) which enables determination of the desired driving parameter on basis of the stored information.

As another example, the stored information may contain information which enables determination of a driving parameter for setting feedback control parameters for a closed loop controller of the motor drive 4, e.g. feedback control parameters for controlling the displacement velocity, e.g. in order to obtain a constant displacement velocity, and/or in order to ramp the displacement velocity during start and stop. Again, the feedback control parameters may advantageously be obtained on basis of information stored in the electronic storage circuit 5.

Another example of the driving parameters includes the length of the screening means 2. The length may for example be used for estimating the end stop and accordingly establish appropriate drive parameters.

Another example of the driving parameters includes the diameter of a roller, e.g. blind roller of the screening device 1. The diameter may be used for determining a change of the rotation velocity of the roller dependent on the length of screening means 2 rolled up on the roller in order to maintain a constant displacement speed of the screening means 2.

Still other examples of driving parameters include an electric energy consumption value for displacing the screening means down to an end-stop and back. The electric energy consumption value may be used for determining if a remaining battery charge of the power supply 7 is sufficiently large to allow displacement of the screening means 2. Another example of a driving parameter is an environmental parameter, e.g. a parameter indication if the specific screening means 1 is allowed to be operated at temperatures below zero degrees Celsius.

These and other examples of driving parameters show that specific driving parameters may advantageously be used for specific screening devices 1 or specific configurations of screening devices. Accordingly, the motor drive 4 may advantageously be configured by a method which comprises the steps of: activating the electronic reader 6, upon activating the electronic reader 6, receiving stored information via wireless communication with the electronic storage circuit 5, and obtaining at least one driving parameter for configuring the motor drive 4, where the at least one driving parameter is obtained based on the stored information.

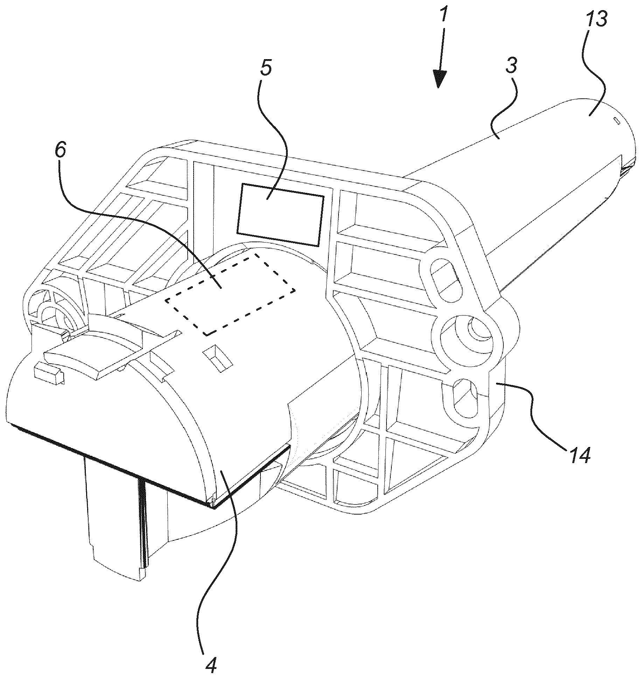

Fig. 2 shows an example of screening device 1 comprising a screening displacement means 3. The screening displacement means 3 comprises a roller 13 for rolling off or rolling up screening means 2 on the roller 13. The screening displacement means 3 further comprises the motor drive 4 in the form of a tubular motor drive. During assembly of the screening device 1, the motor drive 4 is pushed into an interior of the roller 13 or into a housing to be contained within the roller 13. The screening displacement means 3 comprises a mounting element 14, e.g. a bracket, for mounting the screening device 1 relative to a window. In this example, the electronic storage circuit 6 is attached to the mounting element 14. When the motor drive 4 is in place, the electronic reader 6 and the electronic storage circuit 5 will be located in proximity to each other so that communication between the electronic reader 6 and the electronic storage circuit 5 is enabled.

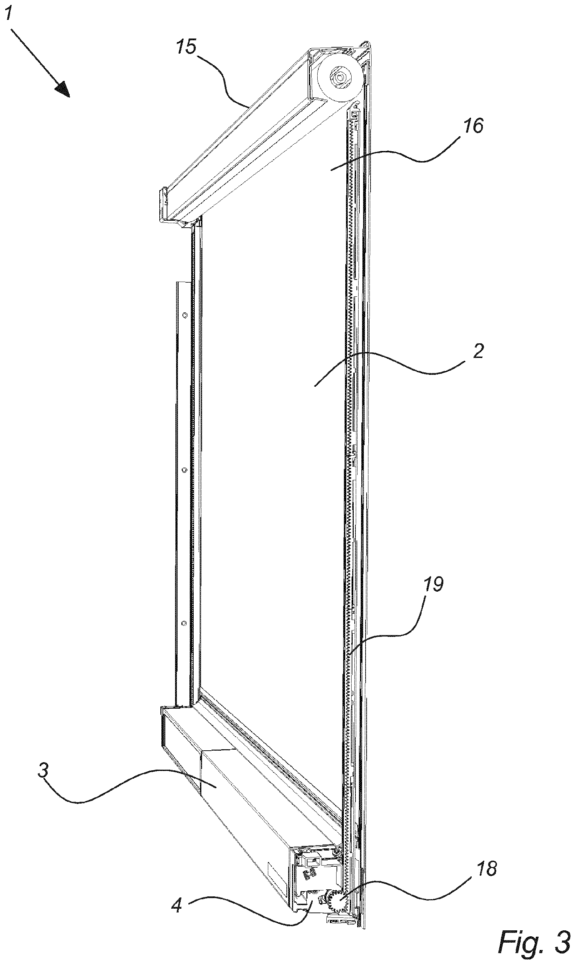

Figs. 3-4 show another example of a screening device 1 comprising the screening displacement means 3. The screening displacement means 3 comprises the motor drive 4. Fig. 3 shows that the screening device 1 comprises an upper profile 15 having a fixed position relative to the window (not shown) and the screening displacement means 3 in the form of a lower transversal profile which is moveably arranged relative to the upper transversal profile 15. The screening device 1 further comprises the screening means 2 extending between the upper and lower transversal profiles. An upper end 16 of the screening means 2 is connected to the upper transversal profile, e.g. to a blind roller 17 comprised by the upper transversal profile. The motor drive 4 is arranged to move the screening displacement means 3, e.g. by means of gear wheels 18 arranged at opposite ends of the screening displacement means 3 to engage with corresponding racks 19 arranged at opposite horizontal sides in the window.

Fig. 4 shows the screening displacement means 3 with the motor drive 4 and motor 10. In this example, the motor drive 4 comprises a printed circuit board 20 on which the electronic reader 6 is mounted. With the motor drive 4 is in place, the electronic storage circuit 5 attached to the screening displacement means 3 proximate to the electronic reader 6, e.g. within 5-15 cm, will be able to send its stored information to the electronic reader 6.

Fig. 5 illustrates a screening device 1 and an architectural opening 21 mounted in an inclined roof surface 22 of a building 23, as seen in a cross-sectional view. In this example, the screening device 1 comprises an upper transversal profile 15 and a displacement means 3 in the form of a lower transversal profile similar to the screening device in Figs 3-4. As explained, the method for configuring the motor drive 4 may advantageously be used for configuring the motor drive 4 according to a determined angular orientation 24 of screening devices 1 mounted in inclined orientations.

### List

- 1.: screening device
- 2.: screening means
- 3.: screening displacement means
- 4.: motor drive
- 5.: electronic storage circuit
- 6.: electronic reader
- 7.: power supply
- 8.: memory
- 9.: processor unit
- 10.: electrical motor
- 11.: gear box
- 12.: coupling
- 13.: roller
- 14.: mounting element
- 15.: upper profile
- 16.: upper end of screening means
- 17.: blind roller
- 18.: gear wheels
- 19.: racks
- 20.: electronic circuit board
- 21.: architectural opening
- 22.: inclined roof surface
- 23.: building
- 24.: angular orientation

## Claims

1. A screening device (1) for an architectural opening (21), such as a window, the screening device comprises
- screening means (2) for screening at least a part of the architectural opening,
- screening displacement means (3) for displacing the screening means, where the screening displacement means comprises a motor drive (4) arranged for driving the screening displacement means, and where the motor drive is controllable dependent on at least one driving parameter,
where the screening device (1) comprises at least one electronic storage circuit (5) comprising stored information, where the motor drive (4) comprises an electronic reader (6) arranged to receive the stored information via wireless communication between the at least one electronic storage circuit (5) and the electronic reader (6), and where the motor drive (4) is arranged to obtain the at least one driving parameter based on the stored information.

2. A screening device according to any of the preceding claims, where the electronic reader (6) and the at least one electronic storage circuit (5) are located in the screening device (1) to enable direct communication between the electronic reader (6) and the at least one electronic storage circuit (5), when the screening displacement means and the motor drive are assembled.

3. A screening device according to any of the preceding claims, where the at least one electronic storage circuit (5) is configured to be powered via a wireless signal received from the electronic reader (6).

4. A screening device according to any of the preceding claims, where the electronic reader (6) is arranged to receive the stored information in response to receiving electronic power from a power supply (7).

5. A screening device according to claim 4, where the power supply (7) is additionally used for powering the motor drive (4).

6. A screening device according to any of the preceding claims, where the electronic reader (6) is enclosed by an enclosure of the motor drive (4) and where the electronic reader (6) is arranged to communicate with the at least one electronic storage circuit (5) via wireless signals transmitted though the enclosure.

7. A screening device according to any of the preceding claims, where the motor drive (4) comprises a memory (8) for storing the driving parameter.

8. A screening device according to any of the preceding claims, where the stored information comprises the at least one driving parameter.

9. A screening device according to any of the preceding claims, where the stored information comprises an identifier for identifying a type or property of the screening device (1).

10. A screening device according to any of the preceding claims, where the motor drive (4) comprises a processor unit (9) capable of determining a physical property relating to said displacement of the screening means (2), and where the processor unit (9) is capable of determining an angular orientation (24) of the screening device based on the physical property and the stored information.

11. A screening device according to any of the preceding claims, where the motor drive comprises a processor unit (9) capable of determining an amplitude of a current consumed by a motor (10) of the motor drive, and where the processor unit (9) is capable of controlling the motor (10) based on the current amplitude and the stored information.

12. A screening device according to any of the preceding claims, where the at least one electronic storage circuit (5) is provided at the screening means (2) or at the screening displacement means (3).

13. A screening device according to any of the preceding claims, where the driving parameter is at least one of motor revolutions, motor speed or motor current.

14. A method for configuring a motor drive (4) for a screening device (1) for an architectural opening (21), where the screening device (1) comprises the motor drive (4) and a screening displacement means (3) for displacing a screening means (2) by means of the motor drive, the method comprises
- activating an electronic reader (6) comprised by the motor drive (4),
- upon activating the electronic reader (6), receiving stored information via wireless communication with at least one electronic storage circuit (5) comprised by the screening device (1),
- obtaining at least one driving parameter for configuring the motor drive, where the at least one driving parameter is obtained based on the stored information.

15. A method according to claim 14, wherein the screening device is a screening device according to any of claims 1-13.

## Patentansprüche

1. Abschirmvorrichtung (1) für eine Gebäudeöffnung (21), wie etwa ein Fenster, wobei die Abschirmvorrichtung Folgendes umfasst:
- ein Abschirmmittel (2) zum Abschirmen wenigstens eines Teils der Gebäudeöffnung,
- ein Abschirmungsverlagerungsmittel (3) zum Verlagern des Abschirmmittels, wobei das Abschirmungsverlagerungsmittel einen Motorantrieb (4) umfasst, der dafür eingerichtet ist, das Abschirmungsverlagerungsmittel anzutreiben, und wobei der Motorantrieb in Abhängigkeit von wenigstens einem Antriebsparameter steuerbar ist,
wobei die Abschirmvorrichtung (1) wenigstens eine elektronische Speicherschaltung (5) umfasst, die gespeicherte Information umfasst, und wobei der Motorantrieb (4) ein elektronisches Lesegerät (6) umfasst, das dafür eingerichtet ist, die gespeicherte Information über eine drahtlose Kommunikation zwischen der wenigstens einen elektronischen Speicherschaltung (5) und dem elektronischen Lesegerät (6) zu empfangen, und wobei der Motorantrieb (4) dafür eingerichtet ist, basierend auf der gespeicherten Information den wenigstens einen Antriebsparameter zu erhalten.

2. Abschirmvorrichtung nach einem der vorhergehenden Ansprüche, wobei das elektronische Lesegerät (6) und die wenigstens eine elektronische Speicherschaltung (5) in der Abschirmvorrichtung (1) angeordnet sind, um eine direkte Kommunikation zwischen dem elektronischen Lesegerät (6) und der wenigstens einen elektronischen Speicherschaltung (5) zu ermöglichen, wenn das Abschirmungsverlagerungsmittel und der Motorantrieb zusammengebaut werden.

3. Abschirmvorrichtung nach einem der vorhergehenden Ansprüche, wobei die wenigstens eine elektronische Speicherschaltung (5) dafür eingerichtet ist, über ein Funksignal mit Energie versorgt zu werden, das vom elektronischen Lesegerät (6) empfangen wird.

4. Abschirmvorrichtung nach einem der vorhergehenden Ansprüche, wobei das elektronische Lesegerät (6) dafür eingerichtet ist, die gespeicherte Information in Reaktion darauf zu empfangen, dass es elektrische Leistung von einer Stromversorgung (7) erhält.

5. Abschirmvorrichtung nach Anspruch 4, wobei die Stromversorgung (7) außerdem für die Versorgung des Motorantriebs (4) verwendet wird.

6. Abschirmvorrichtung nach einem der vorhergehenden Ansprüche, wobei das elektronische Lesegerät (6) in einem Gehäuse des Motorantriebs (4) untergebracht ist und wobei das elektronische Lesegerät (6) dafür eingerichtet ist, mit der wenigstens einen elektronischen Speicherschaltung (5) über Funksignale zu kommunizieren, die durch das Gehäuse hindurch übertragen werden.

7. Abschirmvorrichtung nach einem der vorhergehenden Ansprüche, wobei der Motorantrieb (4) einen Speicher (8) zum Speichern des Antriebsparameters umfasst.

8. Abschirmvorrichtung nach einem der vorhergehenden Ansprüche, wobei die gespeicherte Information den wenigstens einen Antriebsparameter umfasst.

9. Abschirmvorrichtung nach einem der vorhergehenden Ansprüche, wobei die gespeicherte Information eine Kennung umfasst, um einen Typ oder eine Eigenschaft der Abschirmvorrichtung (1) zu identifizieren.

10. Abschirmvorrichtung nach einem der vorhergehenden Ansprüche, wobei der Motorantrieb (4) eine Prozessoreinheit (9) umfasst, die dafür eingerichtet ist, eine physikalische Eigenschaft zu bestimmen, die in Bezug zur Verlagerung des Abschirmmittels (2) steht, und wobei die Prozessoreinheit (9) dafür eingerichtet ist, basierend auf der physikalischen Eigenschaft und der gespeicherten Information eine Winkelorientierung (24) der Abschirmvorrichtung zu bestimmen.

11. Abschirmvorrichtung nach einem der vorhergehenden Ansprüche, wobei der Motorantrieb eine Prozessoreinheit (9) umfasst, die dafür eingerichtet ist, eine Amplitude eines Stroms, der von einem Motor (10) des Motorantriebs verbraucht wird, zu bestimmen, und wobei die Prozessoreinheit (9) dafür eingerichtet ist, den Motor (10) basierend auf der Stromamplitude und der gespeicherten Information zu steuern.

12. Abschirmvorrichtung nach einem der vorhergehenden Ansprüche, wobei die wenigstens eine elektronische Speicherschaltung (5) am Abschirmmittel (2) oder am Abschirmungsverlagerungsmittel (3) eingerichtet ist.

13. Abschirmvorrichtung nach einem der vorhergehenden Ansprüche, wobei der Antriebsparameter wenigstens einer der Folgenden ist: Motorumdrehungen, Motorgeschwindigkeit oder Motorstrom.

14. Verfahren zum Konfigurieren eines Motorantriebs (4) für eine Abschirmvorrichtung (1) für eine Gebäudeöffnung (21), wobei die Abschirmvorrichtung (1) den Motorantrieb (4) und ein Abschirmungsverlagerungsmittel (3) zum Verlagern eines Abschirmmittels (2) durch den Motorantrieb umfasst, wobei das Verfahren Folgendes umfasst:
- Aktivieren eines elektronischen Lesegeräts (6), das im Motorantrieb (4) enthalten ist,
- nach dem Aktivieren des elektronischen Lesegeräts (6), Empfangen einer gespeicherten Information über eine drahtlose Kommunikation mit wenigstens einer elektronischen Speicherschaltung (5), die in der Abschirmvorrichtung (1) enthalten ist,
- Erhalten wenigstens eines Antriebsparameters zum Konfigurieren des Motorantriebs, wobei der wenigstens eine Antriebsparameter basierend auf der gespeicherten Information erhalten wird.

15. Verfahren nach Anspruch 14, wobei die Abschirmvorrichtung eine Abschirmvorrichtung nach einem der Ansprüche 1 bis 13 ist.

## Revendications

1. Dispositif de protection (1) destiné à une ouverture architecturale (21), telle qu'une fenêtre, le dispositif de protection comprenant
- un moyen de protection (2) destiné à protéger au moins une partie de l'ouverture architecturale,
- un moyen de déplacement de protection (3) destiné à déplacer le moyen de protection, dans lequel le moyen de déplacement de protection comprend un entraînement à moteur (4) prévu pour entraîner le moyen de déplacement de protection, et dans lequel l'entraînement à moteur peut être contrôlé selon au moins un paramètre d'entraînement,
dans lequel le dispositif de protection (1) comprend au moins un circuit de stockage électronique (5) comprenant des informations stockées, dans lequel l'entraînement à moteur (4) comprend un lecteur électronique (6) prévu pour recevoir les informations stockées via une communication sans fil entre le au moins un circuit de stockage électronique (5) et le lecteur électronique (6), et dans lequel l'entraînement à moteur (4) est prévu pour obtenir le au moins un paramètre d'entraînement sur la base des informations stockées.

2. Dispositif de protection selon l'une quelconque des revendications précédentes, dans lequel le lecteur électronique (6) et le au moins un circuit de stockage électronique (5) sont situés dans le dispositif de protection (1) afin de permettre une communication directe entre le lecteur électronique (6) et le au moins un circuit de stockage électronique (5), lorsque le moyen de déplacement de protection et l'entraînement à moteur sont assemblés.

3. Dispositif de protection selon l'une quelconque des revendications précédentes, dans lequel le au moins un circuit de stockage électronique (5) est configuré pour être alimenté via un signal sans fil reçu de la part du lecteur électronique (6).

4. Dispositif de protection selon l'une quelconque des revendications précédentes, dans lequel le lecteur électronique (6) est prévu pour recevoir les informations stockées en réponse à la réception d'une énergie électronique de la part d'une alimentation (7).

5. Dispositif de protection selon la revendication 4, dans lequel l'alimentation (7) est en outre utilisée pour alimenter l'entraînement à moteur (4).

6. Dispositif de protection selon l'une quelconque des revendications précédentes, dans lequel le lecteur électronique (6) est enfermé par un boîtier de l'entraînement à moteur (4), et dans lequel le lecteur électronique (6) est prévu pour communiquer avec le au moins un circuit de stockage électronique (5) via des signaux sans fil transmis par le biais du boîtier.

7. Dispositif de protection selon l'une quelconque des revendications précédentes, dans lequel l'entraînement à moteur (4) comprend une mémoire (8) destinée à stocker le paramètre d'entraînement.

8. Dispositif de protection selon l'une quelconque des revendications précédentes, dans lequel les informations stockées comprennent le au moins un paramètre d'entraînement.

9. Dispositif de protection selon l'une quelconque des revendications précédentes, dans lequel les informations stockées comprennent un identifiant destiné à identifier un type ou une propriété du dispositif de protection (1).

10. Dispositif de protection selon l'une quelconque des revendications précédentes, dans lequel l'entraînement à moteur (4) comprend une unité de processeur (9) capable de déterminer une propriété physique liée audit déplacement du moyen de protection (2), et dans lequel l'unité de processeur (9) est capable de déterminer une orientation angulaire (24) du dispositif de protection sur la base de la propriété physique et des informations stockées.

11. Dispositif de protection selon l'une quelconque des revendications précédentes, dans lequel l'entraînement à moteur comprend une unité de processeur (9) capable de déterminer une amplitude d'un courant consommé par un moteur (10) de l'entraînement à moteur, et dans lequel l'unité de processeur (9) est capable de contrôler le moteur (10) sur la base de l'amplitude de courant et des informations stockées.

12. Dispositif de protection selon l'une quelconque des revendications précédentes, dans lequel le au moins un circuit de stockage électronique (5) est prévu au niveau du moyen de protection (2) ou au niveau du moyen de déplacement de protection (3).

13. Dispositif de protection selon l'une quelconque des revendications précédentes, dans lequel le paramètre d'entraînement est au moins l'un d'un nombre de tours du moteur, d'une vitesse du moteur ou d'un courant du moteur.

14. Procédé de configuration d'un entraînement à moteur (4) destiné à un dispositif de protection (1) destiné à une ouverture architecturale (21), dans lequel le dispositif de protection (1) comprend l'entraînement à moteur (4) et un moyen de déplacement de protection (3) destiné à déplacer un moyen de protection (2) à l'aide de l'entraînement à moteur, le procédé comprenant
- l'activation d'un lecteur électronique (6) compris par l'entraînement à moteur (4),
- lors de l'activation du lecteur électronique (6), la réception d'informations stockées via une communication sans fil avec au moins un circuit de stockage électronique (5) compris par le dispositif de protection (1),
- l'obtention d'au moins un paramètre d'entraînement pour configurer l'entraînement à moteur, dans lequel le au moins un paramètre d'entraînement est obtenu sur la base des informations stockées.

15. Procédé selon la revendication 14, dans lequel le dispositif de protection est un dispositif de protection selon l'une quelconque des revendications 1 à 13.
